# EUROPEAN PATENT SPECIFICATION

(11) **EP 2 705 749 B1**
(45) Date of publication and mention of the grant of the patent: **06.07.2016**
(21) Application number: 13183472.3
(22) Date of filing: 09.09.2013
(51) Int. Cl.: A01K 43/10, B41F 3/12, B41M 1/40, B41F 17/00, B41F 17/30, B41K 3/02

(54) **Method and device for stamping eggs**
Verfahren und Vorrichtung zur Kennzeichnung von Eiern
Procédé et dispositif à marquer des oeufs

(30) Priority: 07.09.2012 NL 2009428
(43) Date of publication of application: 12.03.2014
(73) Proprietor: Hedipack Technology Centre B.V., 6971 LG Brummen (NL)
(72) Inventor: Grootherder, Berend Derk, 6971 LG Brummen (NL)
(74) Representative: Algemeen Octrooi- en Merkenbureau B.V.

(56) References cited:
- DD-A1- 111 774
- DE-A1- 10 305 445

## Description

The present invention relates to a device according to the preamble of claim 1. The phrase "in the path of movement" as used here is understood to mean that the stamping surface does not allow free passage of the egg because the stamping surface is located in a horizontal projection, or at least a projection parallel to the conveying direction, of the passing egg. Upon passage of an egg, the passing egg preferably lifts the stamping surface directly, that is, through direct contact with the stamping device, preferably with the stamping surface thereof.

In known stamping devices of the type mentioned in the introduction, a stamp is in a starting position, which is meant to be the position in which the stamping device awaits the passage of an egg to be stamped but does not carry out a stamping action (yet), at such a height relative to the conveyor track that eggs could easily pass thereunder without making contact with the stamping surface. When an egg to be stamped passes under the stamping surface, the egg will stop and the stamping surface will move down to leave an imprint on the shell of the egg. The stamping surface will then move up again and the conveyor will be set going again. The stopping and starting of the conveyor has a limiting effect on the capacity of an egg processing device of which the stamping device forms part.

In an alternative stamping device of the type referred to in the introduction, the stamping device, or at least the stamping surface thereof, moves in horizontal direction along with the egg during the stamping operation, so that the egg surface to be stamped and the stamping surface will not move in horizontal direction relative to each other. The stamping device moves down during the synchronous horizontal movement for pressing the stamping surface onto the egg. The stamping device then returns to the starting position for stamping a next egg. After the contact between the egg and the stamping surface has been released, the horizontal movement can be interrupted and the stamping device, or at least the stamping surface thereof, can be returned to the starting position. A drawback of this device is that it is relatively complex and that it requires an accurate positioning of the eggs on the conveyor track and a synchronised control of the movement of the conveyor and the stamping device.

German patent application DE 103 05 445 A1 discloses a device for marking eggs comprising a print device for applying a marking material at the surface of the eggs. The printing device is arranged like rolls and is held by a carrying device. The carrying device is arranged positionable with respect to the carrying device. A printing roll is arranged in the path of movement of the eggs. By the movement in a conveyor direction the eggs come in the area of the print roll. Based upon the consideration of the conveying movement of the eggs, the print roll rolls over a surface of the eggs.

German patent application DD 111 774 (A1) discloses a device for stamping eggs at sorting machines, in which the eggs which are sorted by size, are conveyed to the packages by conveyor chains. A stamp roll is rotated by the eggs which are carried by the conveyor chain and rolls over the respective egg.

The object of the present invention is to provide a stamping device of the type referred to in the introduction which is able to stamp an egg in a simple manner while being transported.

This object is achieved according to the present invention, as defined in claim 1, in that manipulation means are provided which cause the egg surface to be stamped to move relative to the stamping surface upon passage of the egg under the stamping surface. Within the framework of the present document this should be interpreted to mean that the centre of gravity of the egg moves in the conveying direction of the conveyor track relative to the stamping surface while the egg shell rolls over the stamping surface and that only that part of the egg shell which makes contact with the stamping surface does not move relative to the stamping surface, seen at least substantially in the conveying direction, during the moment of contact. The surface to be stamped or, in other words, the egg shell, preferably rolls over the stamping surface, so that the stamping surface can be provided as a static stamping surface. This in contrast to the known egg the stamping devices, in which a stamping surface and the shell of an egg to be stamped do not move relative to each other while stamping takes place. The advantage of this optional aspect of the present invention is that in egg can be stamped in a simple manner while being transported. Thus the object of the present invention is achieved.

This aspect can also be applied independently of the feature of the present invention that the stamping surface has a starting position spaced a first distance above the conveyor track on which the stamping surface is located in the path of movement of eggs to be stamped, and in that the stamping surface can move upward relative to the starting position upon making contact with the shell of an egg passing under the stamping element in use of the device, such that the stamping surface will leave an imprint on the egg shell, with the stamping surface returning to the starting position after passage of the egg.

This aspect could thus be independently protected as a stamping device for stamping eggs, comprising an egg conveyor provided with at least one conveyor track for eggs and a stamping element disposed above the at least one conveyor track, at the bottom side of which element a stamping surface is provided, which stamping surface is vertically movable relative to the path of movement of the eggs and which comprises ink supply means for supplying ink to the stamping surface, wherein manipulation means are provided which cause the egg surface to be stamped to move relative to the stamping surface upon passage of the egg under the stamping surface. It is preferable in that regard if the stamping device is designed so that an egg shell of an egg to be stamped can roll over the stamping surface during contact with the stamping surface. An advantage of the aspect in question over prior art devices is that thus an egg stamping device is provided in which means for causing an egg present on a conveyor track and a stamping surface provided on the stamping device to move synchronously are not needed. In a preferred embodiment of this aspect of the present invention, the stamping surface is located in the path of movement of eggs to be stamped in use but, as already said before, this is not necessary.

The optional feature hardly reduces the capacity of an egg processing device, if at all, and/or which is less complex than at least devices of the second known type, and by means of which a stamp of sufficient quality can nevertheless be placed on a passing egg.

A situation in which the above optional feature is not present is, for example if the stamping surface has a starting position which is not located in the path of movement of eggs to be stamped but moves in the direction of an egg to be stamped upon passage of the egg to be stamped, or in that the stamping surface is located in the path of movement of eggs to be stamped, as is the case with the present invention, wherein the stamping surface is moved to the correct height for stamping an egg other than by contact with the shell of an egg that passes under the stamping element in use of the device.

The latter, thus optional, feature of the present invention obviates the need to control the spacing between the stamping surface and the conveyor track via a control unit in order to obtain the correct spacing, which depends in part on the shape and the size of the egg in question, and the required synchronisation. The characterising feature of the present invention provides various possibilities for realising an adequate stamping of passing eggs, a number of which possibilities will be discussed hereinafter. It is for example possible to use a stamping element as described in EP 1 457 108 A1 in the stamping device.

In a preferred embodiment of the present invention, the egg conveyor comprises a number of parallel conveyor tracks, for example six parallel conveyor tracks, and a stamping surface provided on a stamping element is disposed above each conveyor track. Preferably, a separate stamping element is
disposed above each conveyor track, which stamping element is moved upward upon making contact with a passing egg. Alternatively, two or more stamping surfaces disposed above several conveyor tracks are provided, in which case in particular the elastic stamping surface is moved upward, i.e. depressed, relative to the stamping element upon passage of an egg on the conveyor track in question.

In prior art devices the stamping surfaces are in some cases arranged in matrix form above parallel conveyor tracks so as to make it possible to stamp a number of successive eggs per track. This is not necessary with the present invention, because every egg that passes over a conveyor track will automatically come into contact with the stamping surface located in the path of movement of the egg, which will leave in imprint on the egg.

In the present document the orientation has so far been selected to correspond to the stamping of the upper surface of eggs present on a conveyor belt. The invention can also be used with different orientations of the device, of course. The idea underlying the invention is that the stamping element, or at least the stamping surface thereof, is located in the path of movement of eggs to be stamped which are being transported, or at least are to be transported, on a conveyor, and will come into contact with the egg shell upon passage of an egg, leaving in imprint on the egg shell.

In a preferred embodiment of the present invention, the stamping element is elastically compressible, preferably substantially in a direction perpendicular to a plane defined by the conveyor track. Because of the elastic compressibility of the stamping element, bumps that occur when the egg and the stamping surface come into contact with each other are dampened, as it were, thus helping to prevent the fragile egg shell from being damaged by the stamping action.

It is preferable in that regard if at least the stamping surface of the stamping element is elastically depressible, preferably substantially in a direction perpendicular to a plane defined by the conveyor track. This enables the stamping surface to adapt itself to the irregular shape of an egg to be stamped. In addition, an elastically compressible stamping surface can simply adapt itself at all times to the constantly varying shapes of successive eggs to be stamped and to possibly varying orientations of the typical asymmetric shape of eggs relative to a central cross-section.

If the stamping element as a whole can spring upwards, preferably in a direction substantially perpendicular to a plane defined by the conveyor track, the height of the stamping surface upon passage of an egg will be adapted to the height of the egg. If this aspect is combined with the aspect of the elastically compressible stamping surface, the result will be that the pressure of the stamping surface on an egg shell upon stamping the same will be less dependent on the height of a passing egg to be stamped.

In a preferred embodiment of the present invention, the spring force at least substantially comes from the force of gravity. In that case no additional means are needed for causing the stamping element to return to the starting position. This is a simple, inexpensive and low-maintenance solution. It is possible, however, to increase the spring force by providing spring means which drive the stamping element in the direction of the starting position, at least in the raised position relative to the starting position.

In a preferred embodiment of the present invention, the stamping element comprises an elongated carrier, which is mounted to the stamping device, above the path of movement, at an angle relative to the vertical at or at least near one end, with the stamping surface being provided at or at least near the other end on the underside of the elongated carrier. As a result, the stamping element can pivot up and down, for example along with the carrier. If the elongated carrier is located behind the first end of the holder seen in the conveying direction of the conveyor, the elongated carrier can be gradually lifted together with the stamping element by a passing egg, with a negligible risk of an egg getting stuck during or after stamping and thus blocking the conveyor track. The smaller the angle between the conveyor belt and the elongated carrier, for example between 10 and 45 degrees, preferably smaller than 30°, the more gradual said lifting will take place.

It is preferable in that regard if the second end of the elongated carrier hangs down with the stamping surface in unloaded condition in the starting position. The term "unloaded" as used here is understood to mean that the element is freely suspended with the second end, except that it can be stopped by a stop member on which it is supported. Thus, an egg can simply push up the second end provided with the stamping surface upon passing the stamping element. The weight of the elongated carrier may be adapted and be distributed over the elongated carrier in such a manner that the stamping element will exert a relatively comparable pressure on each and every egg to be stamped when eggs of varying dimensions pass the stamping element. The quality of a stamp can thus be determined in a simple manner.

In a preferred embodiment of the present invention, a stop member is provided, which prevents the stamping element provided with the stamping surface from moving downward further than the first distance above the conveyor track in the starting position. In this way the stamping element is prevented from coming into contact with the conveyor track itself, which could lead to damage to the stamping device or to fouling of the conveyor with ink.

Alternatively, or additionally, the spacing between the stamping surface and the conveyor track can be increased in that the conveyor track can be resiliently depressed. This aspect provides or contributes toward the desired increase of the spacing between the stamping surface and the conveyor track upon passage of an egg and upon returning to the starting position after the passage of an egg.

In a preferred embodiment of the present invention, the manipulation means comprise passive manipulation means. By this is meant that the passive manipulation means do not comprise any (additional) moving parts for manipulating passing eggs. Thus, the eggs can be set moving relative to the stamping surface by using simple, inexpensive but reliable means.

The passive manipulation means preferably comprise resistance means which, in use, offer resistance against movement of at least part of a passing egg. In use, the resistance means offer resistance to a part of the egg, so that the egg is set moving relative to the conveyor track.

When the resistance means engage a passing egg at the upper side thereof so as to slow down the speed of the egg at the upper side, the egg can slightly roll back at a desired rotational speed over the conveyor track, rolling over the stamping surface, which will come into contact with the rotating egg at the upper side. The stamping surface will thus leave an imprint on the egg shell. An egg will preferably roll back at half the speed of the conveyor track. In a preferred embodiment, the stamping element, furthermore preferably the stamping surface thereof, is also designed to function as a resistance means. The integration of the resistance function in the stamping element leads to a reduced number of parts of the stamping device and less contact with a passing egg. In the case of passive manipulation means, the egg will only move upon passing the stamping surface.

In an alternative embodiment of the present invention, the manipulation means comprise active manipulation means. By this is meant that the manipulation means move so as to cause eggs that pass the stamping surface to move relative to the stamping surface. In the case of active manipulation means, an egg may also move before or after passing the stamping surface.

It is preferable in that case if the manipulation means are in motion relative to an egg present on the conveyor track in use and engage the egg for transmitting said motion at least partially to the egg.

In a preferred embodiment of the present invention, the conveyor is a roller conveyor. In such a conveyor, an egg can be carried between two successive rollers, seen in the conveying direction, being in contact with the circumferential surface of the two rollers. When the rollers roll over an underlying surface as a result of a conveying movement of the conveyor, an egg supported by the rollers will be rotated in the opposite direction of the direction of rotation of the rolls, according to the principle of two meshing gears. Thus, the upper side of the egg in question can simply roll over a stamping surface disposed above the conveyor track, whilst an imprint is left on the egg in question. When roller conveyors are used for conveying eggs, the rollers usually have a concave shape, so that an egg is supported on the roller surface in cavities of the rollers in question. With such roller conveyors the rollers preferably roll over an underlying surface over a distance that equals at least substantially the height of the contact surfaces with the egg. Thus, a desired rotation is obtained for causing the egg shell to roll neatly over the stamping surface.

In an alternative preferred embodiment of the present invention, the conveyor is a ribbon conveyor. In a ribbon conveyor for eggs, eggs are present on two ribbons extending parallel to each other, which move synchronously in the conveying direction. The ribbons may be made of a slightly flexible material, such as rubber, for example. During transport, the eggs are stationary on the ribbons. When an egg passes under the stamping surface, it experiences resistance at the upper side, as a result of which the egg is decelerated at the upper side in relation to the bottom side, causing it to roll over the stamping surface disposed above the conveyor track. In such an embodiment it is preferable if the ribbons provide some resistance to the eggs present on the ribbons so as to prevent the ribbons from sliding (slipping) under the decelerated eggs and cause the egg shell to roll nicely over the stamping surface.

The present invention, according to a second aspect thereof, relates to a method for stamping eggs according to claim 13. Such a method has already been discussed in the description of the device according to the prior art. In said device, means are provided for moving the stamping surface and an egg present on the conveyor track synchronously relative to each other. The object of the present invention, according to the second aspect thereof, is to provide a method for stamping an egg in which such synchronisation means are not needed and which is able to stamp an egg in a simple manner while being transported. According to the present invention, this object is achieved in that the egg moves, preferably rotates, relative to a stamping surface upon passing the stamping surface.

Preferably, the shell of the egg rolls over the stamping surface upon passing the stamping surface.

As is the case with the description of the device according to the present invention, the rolling of an egg over the stamping surface while the egg is being provided with a stamp can be protected independently of the aspect of the present invention, that the stamping surface is located in the path of movement of the eggs in the starting position and is lifted into contact with the shell of the egg upon passage of the egg, leaving an imprint on the egg shell, after which the stamping surface returns to the starting position, viz. as a method for stamping eggs passing under a stamping surface on a conveyor track of an egg conveyor by means of said stamping surface, comprising the steps of positioning the stamping surface above the conveyor track and subsequently moving an egg past the stamping surface on the conveyor track, with the shell of the egg rolling over the stamping surface upon passing the stamping surface.

The present invention is shown in the figures and discussed in the description on the basis of only a few embodiments. However, the figures and the description in no way limit the scope of the present invention, which is defined in the appended claims. The invention is described herein for use with an egg whose longitudinal axis is oriented substantially horizontally and perpendicular to the conveying direction, at least during stamping. Other arrangements are also possible, for example for stamping eggs whose longitudinal axis is oriented vertically, although it may be necessary to make additional provisions in that case because the force of gravity hardly plays a part, if at all, in the interaction of forces that is required for stamping eggs. The same applies as regards a longitudinal axis of eggs that is not oriented perpendicular relative to the conveying direction. In the description mention is consistently made of an egg that rolls over the stamping surface. According to another possibility, the stamping surface is movable and the eggs are stationary on the conveyor belt, for example. Furthermore, the eggs may be present on egg holders on the conveyor belt instead of lying directly on the conveyor belt itself, on which egg holders the eggs can be manipulated, if desired.

The present invention will be described in more detail hereinafter with reference to a few embodiments, which are illustrated in the following figures, in which:
Figure 1 is a perspective view of a first embodiment of an egg stamping device according to the present invention;
Figures 2a-2c are schematic side views showing a method according to the present invention carried out by means of a stamping device according to figure 1;
Figure 3 is a perspective view of an alternative embodiment of an egg stamping device according to the present invention;
Figures 4a-4c are schematic side views showing a method according to the present invention carried out by means of the stamping device according to figure 3;
Figures 5a-5c are schematic side views showing a part of an alternative embodiment of a stamping device and a method according to the present invention; and
Figures 6a-6c are also schematic side views showing a part of another alternative embodiment of a stamping device and a method according to the present invention.

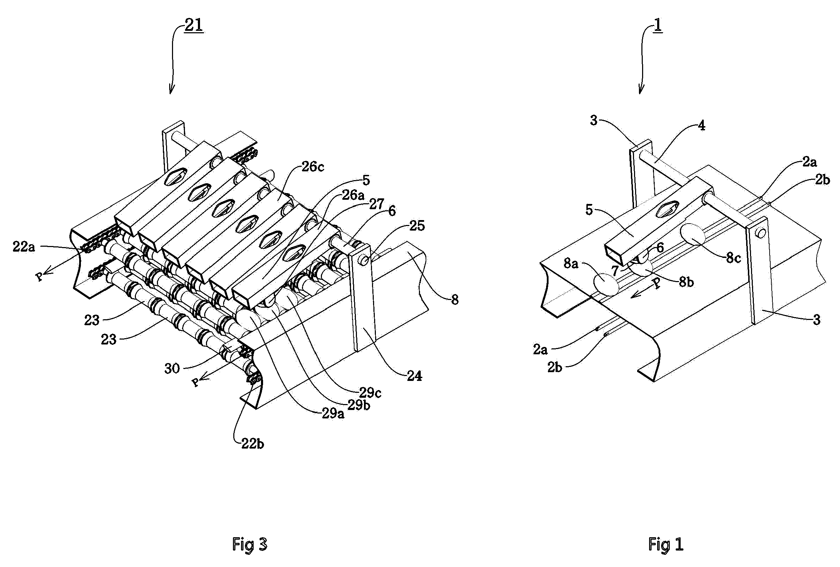

With reference to figure 1, there is shown a perspective view of a stamping unit of a first embodiment of an egg stamping device 1 according to the present invention. The egg stamping device 1 comprises an egg conveyor with a conveyor track that comprises two parallel endless ribbons 2a, 2b, which ribbons are driven in the direction indicated by arrow P by driving means (not shown) in a manner that is known for endless conveyors. Two supports 3 support a shaft 4, which keeps a carrying element 5 positioned above the conveyor track defined by the ribbons 2a, 2b. The carrying element 5 is elongate in shape and is pivotable relative to the shaft 4 at the end that is connected to the shaft 4, carrying a stamping element 6 on the underside, near the opposite end, with a stamping surface 7 at the bottom side thereof, which rests on the upper side of an egg 8b in figure 1. Located below the carrying element 5 is a stop member (not shown in figure 1) for the carrying element 5. As is shown in figure 1, egg 8a, which has already passed the stamping element 6, is provided with an imprint AAA, egg 8b is being provided with an imprint and egg 8c is not provided with an imprint yet.

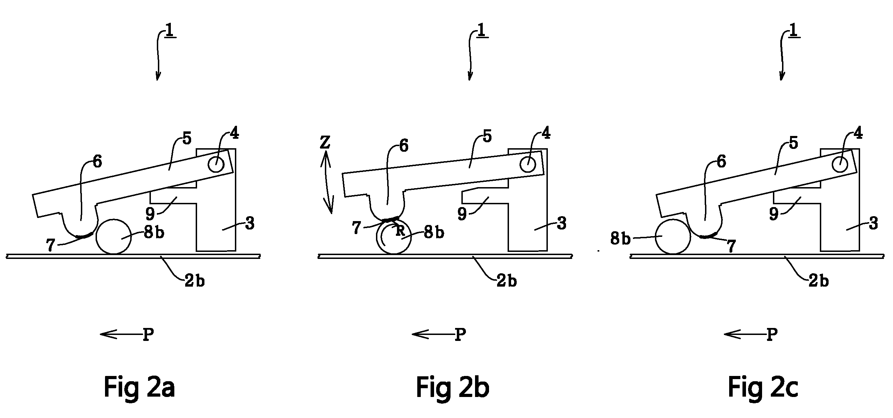

Figures 2a-2c schematically show in side view the operation of the device of figure 1. Figure 2a shows the egg stamping device 1 in a starting position, in which the stamping surface 7, which rests on the stop member 9, is located in the path of movement of egg 8b. The path of movement of egg 8b extends across the width of the egg 8b that lies on the ribbons 2a 2b, which width extends perpendicular to the plane of the drawing, between the upper side and the bottom side of the egg 8b. That is, the path of movement is a horizontal projection in the conveying direction of the egg 8b of a vertical longitudinal section of the egg 8b. In the upper part of their path of movement, the ribbons (only ribbon 2b is shown in figures 2a-2c) that form the conveyor track for the eggs move in the direction indicated by arrow P, to the left in the drawing, toward the stamping element 6 provided with the stamping surface 7. Egg 8b is supported on the ribbons 2a, 2b and hardly moves, if at all, relative to the ribbons 2a, 2b.

After some time the shell of the egg 8b, more in particular the front upper quadrant thereof, comes into contact with the stamping element 6 as a result of the egg being conveyed in the conveying direction by the ribbons 2a, 2b, the surface of which stamping element tends to stop the upper side of the egg 8b. Because the conveying action of the ribbons 2a, 2b continues, the bottom side of the egg 8b is moved ahead, however. As a result, the upper surface of the egg 8b rolls over the outer surface of the stamping element 6, as it were, at the bottom side of the stamping element 6, whose lower end forms a stamping surface 7. The egg 8b thus rotates in the direction indicated by arrow F. During this rolling motion the stamping surface 7 comes into contact with the egg 8b rolling over said stamping surface and leaves an imprint on the shell of the egg 8b. Upon passage of the egg 8b under the stamping element 6, the carrying element 5 will first pivot slightly upwards in the direction indicated by arrow Z, and after passing the egg it will pivot down again to the starting position shown in figure 2c. In the starting position, the carrying element 5 is supported on the stop member 9 again so as to prevent the stamping element from coming into contact with the conveyor track. In figure 2c the egg stamping device 1 is in the same position as in figure 2a for receiving a next egg to be stamped. In fact, the only difference between figures 2a and 2c is the fact that the egg 8b has been transported past the stamping element 6 in figure 2c and carries an imprint A.

With reference now to figure 3, there is shown in perspective view an alternative embodiment of a stamping device 21 according to the present invention. The egg conveyor of the stamping device 21 comprises two endless chains 22a, 22b, which are driven in the direction indicated by arrows P in a manner which is known per se by a driving device (not shown). Rods (not shown) extend between the chains 22a, 22b, around which rods cylindrical egg holders 23 are rotatably provided. An egg is carried between two egg holders 23 arranged one behind the other, seen in the conveying direction. Upright supports 24 extend on either side of the chain conveyor, which supports support a shaft 25 on which carrying elements 26 are pivotally provided. Similarly to the egg stamping device 1 of figure 1, a stamping element 27 is present on the underside of each carrying element 26, which stamping element carries a stamping surface (not shown in figure 3) which, in use, is located in the path of movement of eggs. In figure 3, three eggs 29a, 29b, 29c are being transported on the conveyor track that is located furthest to the left, seen in the conveying direction of the eggs. Egg 29b is located under the stamping element 27 of the carrying element 26a. As is shown in figure 3, the egg 29b has caused the carrying element 26a to pivot slightly upward relative to the other carrying elements 26, which are in their starting position.

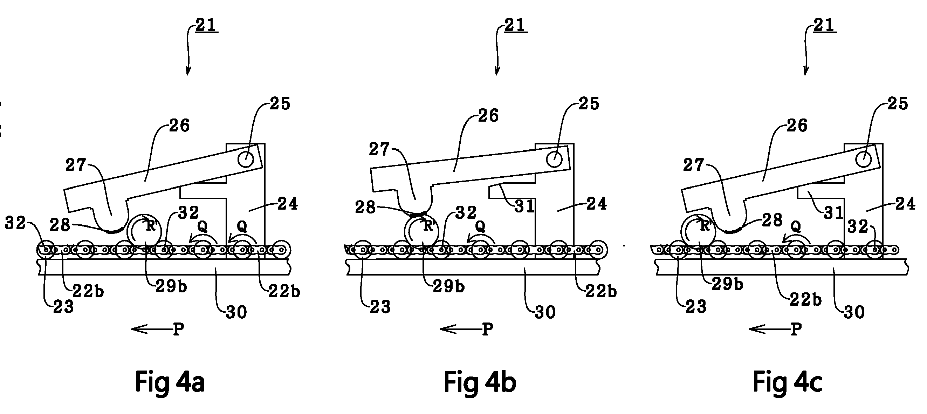

Figures 4a-4c are schematic side views showing the operation of a device according to figure 3. Also here an egg 29b is being transported in the direction indicated by arrow P, similarly to the egg 8b in figures 2a-2c, in this case by means of a roller conveyor, in which chains 22a- 22b (of which only the chain 22b is shown in figures 4a-4c) drive shafts 32, on which rollers 23 are rotatably provided. During transport, the rollers 23 roll over a surface 30 of a resistance rail on the underside, which resistance rail extends horizontally under the rollers 23. Because the rollers 23, driven by the chains 22a, 22b, roll over the surface 30, rotating in the direction indicated by arrows Q, an egg will rotate in the opposite direction indicated by arrow R'. This is different from the situation shown the device illustrated in figure 1, in which the egg 8b is stationary on the ribbons 2, at least as long as the egg 8b is not engaged by the stamping element 6. When the egg 29b comes into contact with the surface of the stamping element 27, it will continue to rotate and roll over the surface of the stamping element 27 in the direction indicated by arrow R', at the same time rolling over the stamping surface 28, which will leave an imprint on the shell of the egg 29b. After the egg 28b has passed the stamping elements 27, the carrying element 26 will have returned to the starting position, see figure 4c. The egg 29b will continue to roll in the direction indicated by arrow R' as long as the rollers 23 roll over the supporting surface 30. Although the resistance rail provided with the supporting surface 30 is provided along the entire length of the roller conveyor in figures 4a-4c, it might suffice for the supporting surface 30 to extend only along a small length near the stamping elements 27. The eggs will rotate on the rollers 23 along said length. Once the rollers 23 are no longer being rotated, the egg will not rotate on the rollers 23 either, of course.

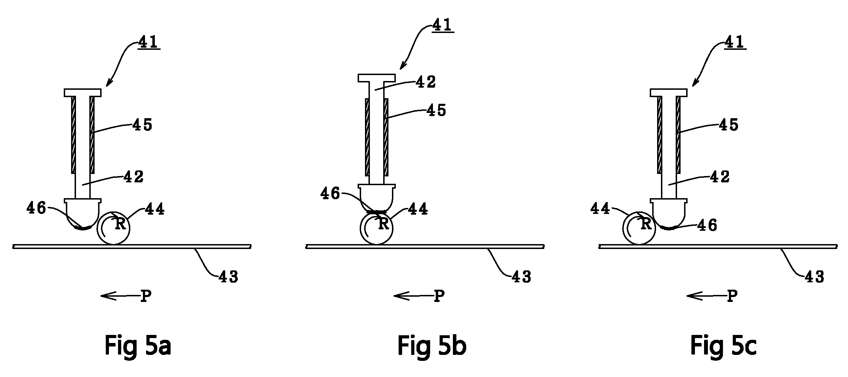

Figures 5a-5c show an alternative suspension of a stamping element 42 in a part of a stamping device 41 comprising a ribbon conveyor 43. When an egg 44 is transported in the direction indicated by arrow P (figure 5b), the egg 44 will come into contact with the bottom side of the stamping element 42 at the location of the stamping element 42 and roll over the bottom surface thereof (figure 5b) in the direction of rotation indicated by arrow R. The stamping element 42 will be pushed upward within a guide 45 under the influence of the egg 44 to be stamped. Once the egg 44 has passed the stamping element 42, it will carry an imprint and the stamping element 42 will drop back to the starting position that is also shown in figure 5a under the influence of the force of gravity. If desired, a spring may be provided, for example between the bottom side of the guide 45 and an upper stop surface formed by the upper side of the widened portion of the stamping element 42 that is present under the guide 45, which spring biases the stamping element in downward direction. As is the case in the preceding embodiments, the stamping surface 46 is located at the bottom end of the stamping element 42.

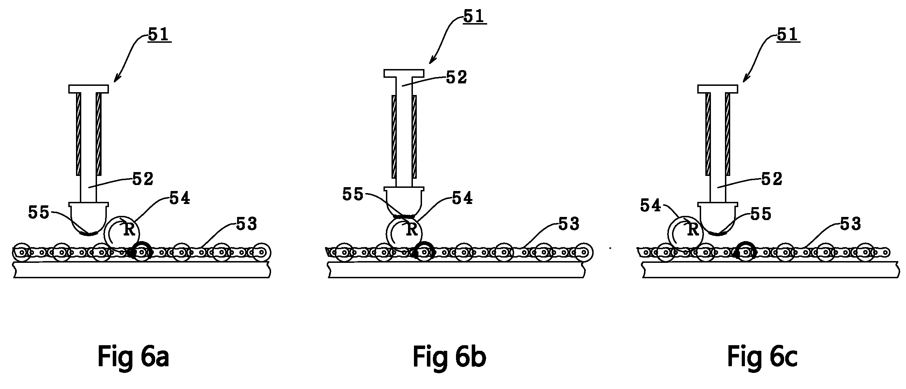

Figure 6a-6c are schematic side views of another alternative embodiment of a stamping element 52 at a part of a stamping device 51 that comprises a chain-roller conveyor 53. When an egg 54 passes the stamping element 52, the stamping element 52 will be lifted whilst also an elastically compressible stamping surface at the bottom end of the stamping element 52 will be compressed (see figure 6b), with the stamping element 52 and the stamping surface 55 returning to the starting position after the egg has passed. It is possible to use a stamping element which cannot move upward, and only compress the stamping surface, but this is not preferable, because the stamping surface will have to compensate for the differences in height between eggs all by itself in that case. The thickness of eggs, i.e. the height in the case of an egg in a horizontal position, can vary from 35 to 48 mm.

The present invention has been explained in the figures and the description thereof with reference to merely a few embodiments. In no way does this limit the scope of the present invention, however, which is defined in the following claims. Mechanical reversals, alternative orientations and the like variants, such as those mentioned in the present document, are also considered to fall within the scope of the invention, of course. In the figures, the stamping surface is positioned at the upper side of the egg at all times. It is also possible, of course, to provide an egg at the bottom side, for example between two ribbons of a ribbon conveyor. In order to realise an adequate operation in combination with a static stamping surface, it will in that case be necessary to provide means which cause the egg to roll over the surface in a direction of rotation opposite the direction of rotation shown in the examples described herein. Alternatively, a stamping surface may be movably provided relative to a rotating egg, for example capable of rotating or reciprocating pivoting movement induced by the passage of an egg, so that the egg will not rotate while being moved, with the stamping surface rolling over the shell of the nonrotating egg upon passage thereof, leaving an imprint on the shell.

## Claims

1. A stamping device (1, 21, 41, 51) for stamping eggs (8, 29, 44, 54), comprising an egg conveyor with at least one conveyor track (2a, 2b, 22a, 22b, 43, 53) for eggs (8, 28, 44, 54) and a stamping element (6, 27, 42, 52) disposed above the at least one conveyor track, on the bottom side of which stamping element a stamping surface (7, 28, 46, 55) which is vertically movable relative to the path of movement of the eggs is provided, and which comprises ink supply means for supplying ink to the stamping surface, wherein the stamping surface (7, 28, 46, 55) has a starting position spaced a first distance above the conveyor track on which the stamping surface is located in the path of movement of eggs to be stamped, and in that the stamping surface can move upward relative to the starting position upon making contact with the shell of an egg (8, 28, 44, 54) passing under the stamping element (6, 27, 42, 52) in use of the device, such that the stamping surface will leave in imprint on the egg shell, with the stamping surface returning to the starting position after passage of the egg, **characterised in that** manipulation means (2a, 2b, 6; 23, 27; 30; 43, 42; 52, 53) are provided which cause the egg surface to be stamped to move relative to the stamping surface (7, 28, 46, 55) upon passage of the egg under the stamping surface.

2. A stamping device according to claim 1, **characterised in that** the stamping element (6, 27, 42, 52) is elastically depressible.

3. A stamping device according to claim 1 or 2, **characterised in that** at least the stamping surface (7, 28, 46, 55) of the stamping element is elastically compressible.

4. A stamping device according to one or more of the preceding claims, **characterised in that** the stamping element as a whole can spring upward, wherein preferably the spring force at least substantially comes from the force of gravity.

5. A stamping device according to one or more of the preceding claims, **characterised in that** the stamping element comprises an elongated carrier (5, 26), which is mounted to the stamping device, above the path of movement, at an angle relative to the vertical at or at least near one end, with the stamping surface being provided on the underside of the elongated carrier at or at least near the other end thereof, being located behind the first end of the holder, seen in the conveying direction of the conveyor.

6. A stamping device according to claim 5, **characterised in that** the second end of the elongated carrier hangs down with the stamping surface in unloaded condition in the starting position.

7. A stamping device according to one or more of the preceding claims, **characterised in that** a stop member (9) is provided, which prevents the stamping element provided with the stamping surface from moving downward further than the first distance above the conveyor track in the starting position.

8. A stamping device according to one or more of the preceding claims, **characterised in that** the conveyor track can be resiliently depressed.

9. A stamping device according to claim 1, **characterised in that** the manipulation means comprise passive manipulation means (6, 27, 42, 52) which preferably comprise resistance means which, in use, offer resistance to the movement of at least part of a passing egg.

10. A stamping device according to either one or more of the preceding claims, **characterised in that** the manipulation means comprise active manipulation means (23).

11. A stamping device according to one or more of the preceding claims, **characterised in that** the manipulation means are in motion relative to an egg present on a conveyor track in use and engage the egg for transmitting said motion at least partially to the egg.

12. A stamping device according to one or more of the preceding claims, **characterised in that** the conveyor is a roller conveyor or a ribbon conveyor.

13. A method for stamping eggs (8, 29, 44, 54) passing under a stamping surface (7, 28, 46, 55) on a conveyor track (2a, 2b, 22a, 22b, 43, 53) of an egg conveyor by means of said stamping surface (7, 28, 46, 55), comprising the steps of the positioning the stamping surface (7, 28, 46, 55) into a starting position and subsequently moving an egg (8, 28, 44, 54) on the conveyor track past the stamping surface (7, 28, 46, 55), **characterised in that** the stamping surface (7, 28, 46, 55) is located in the path of movement of the eggs (8, 28, 44, 54) in the starting position and is lifted into contact with the shell of the egg (8, 28, 44, 54) upon passage of the egg (8, 28, 44, 54), leaving in imprint on the egg shell, after which the stamping surface (7, 28, 46, 55) returns to the starting position, **characterised in that** the egg (8, 28, 44, 54) moves relative to a stamping surface (7, 28, 46, 55) upon passing the stamping surface (7, 28, 46, 55), with the shell of the egg preferably rolling over the stamping surface (7, 28, 46, 55) upon passing the stamping surface (7, 28, 46, 55).

## Patentansprüche

1. Kennzeichnungsvorrichtung (1, 21, 41, 51) zum Kennzeichnen von Eiern (8, 29, 44, 54), mit einem Eierförderer mit wenigstens einer Förderbahn (2a, 2b, 22a, 22b, 43, 53) für Eier (8, 28, 44, 54) und einem Kennzeichnungselement (6, 27, 42, 52), das oberhalb der wenigstens einen Förderbahn angeordnet ist, auf dessen Unterseite eine Kennzeichnungsfläche (7, 28, 46, 55) vorgesehen ist, die relativ zum Bewegungspfad der Eier vertikal bewegbar ist, und das Farbversorgungsmittel zur Versorgung der Kennzeichnungsfläche mit Farbe umfasst, wobei die Kennzeichnungsfläche (7, 28, 46, 55) eine Ausgangsposition hat, die in einem ersten Abstand oberhalb der Förderbahn von dieser beabstandet ist, wobei in der Förderbahn die Kennzeichnungsfläche im Bewegungspfad zu kennzeichnender Eier gelegen ist, und wobei sich die Kennzeichnungsfläche beim Inkontakttreten mit der Schale eines Eis (8, 28, 44, 54), das im Gebrauch der Vorrichtung unter dem Kennzeichnungselement (6, 27, 42, 52) hindurchläuft, relativ zur Ausgangsposition nach oben bewegen kann, sodass die Kennzeichnungsfläche einen Abdruck auf der Eierschale hinterlässt, wobei die Kennzeichnungsfläche nach dem Hindurchlaufen des Eis in die Ausgangsposition zurückkehrt, **dadurch gekennzeichnet, dass** Handhabungsmittel (2a, 2b, 6; 23, 27; 30; 43, 42; 52, 53) vorgesehen sind, die bewirken, dass sich die zu kennzeichnende Eioberfläche beim Hindurchlaufen des Eis unter der Kennzeichnungsfläche relativ zur Kennzeichnungsfläche (7, 28, 46, 55) bewegt.

2. Kennzeichnungsvorrichtung nach Anspruch 1, **dadurch gekennzeichnet, dass** das Kennzeichnungselement (6, 27, 42, 52) elastisch herunterdrückbar ist.

3. Kennzeichnungsvorrichtung nach Anspruch 1 oder 2, **dadurch gekennzeichnet, dass** wenigstens die Kennzeichnungsfläche (7, 28, 46, 55) des Kennzeichnungselements elastisch komprimierbar ist.

4. Kennzeichnungsvorrichtung nach einem oder mehreren der vorhergehenden Ansprüche, **dadurch gekennzeichnet, dass** das Kennzeichnungselement als Ganzes nach oben federn kann, wobei vorzugsweise die Federkraft zumindest im Wesentlichen von der Schwerkraft herrührt.

5. Kennzeichnungsvorrichtung nach einem oder mehreren der vorhergehenden Ansprüche, **dadurch gekennzeichnet, dass** das Kennzeichnungselement einen länglichen Träger (5, 26) umfasst, der an einem Ende oder wenigstens in der Nähe eines Endes an der Kennzeichnungsvorrichtung oberhalb des Bewegungspfads in einem Winkel zur Vertikalen montiert ist, wobei die Kennzeichnungsfläche auf der Unterseite des länglichen Trägers an seinem anderen Ende oder wenigstens in der Nähe seines anderen Endes vorgesehen ist und sich in Förderrichtung des Förderers gesehen hinter dem ersten Ende des Halters befindet.

6. Kennzeichnungsvorrichtung nach Anspruch 5, **dadurch gekennzeichnet, dass** das zweite Ende des länglichen Trägers nach unten hängt, wenn die Kennzeichnungsfläche im unbelasteten Zustand in der Ausgangsposition ist.

7. Kennzeichnungsvorrichtung nach einem oder mehreren der vorhergehenden Ansprüche, **dadurch gekennzeichnet, dass** ein Anschlagelement (9) vorgesehen ist, das verhindert, dass sich das mit der Kennzeichnungsfläche versehene Kennzeichnungselement in der Ausgangsposition weiter nach unten bewegt als bis zum ersten Abstand über der Förderbahn.

8. Kennzeichnungsvorrichtung nach einem oder mehreren der vorhergehenden Ansprüche, **dadurch gekennzeichnet, dass** die Förderbahn federnd heruntergedrückt werden kann.

9. Kennzeichnungsvorrichtung nach Anspruch 1, **dadurch gekennzeichnet, dass** die Handhabungsmittel passive Handhabungsmittel (6, 27, 42, 52) umfassen, die vorzugsweise Widerstandsmittel umfassen, die im Gebrauch der Bewegung wenigstens eines Teils eines hindurchlaufenden Eis einen Widerstand entgegensetzen.

10. Kennzeichnungsvorrichtung nach einem oder mehreren der vorhergehenden Ansprüche, **dadurch gekennzeichnet, dass** die Handhabungsmittel aktive Handhabungsmittel (23) umfassen.

11. Kennzeichnungsvorrichtung nach einem oder mehreren der vorhergehenden Ansprüche, **dadurch gekennzeichnet, dass** die Handhabungsmittel relativ zu einem Ei, das sich auf einer im Gebrauch befindlichen Förderbahn befindet, in Bewegung sind und am Ei angreifen, um die Bewegung zumindest teilweise auf das Ei zu übertragen.

12. Kennzeichnungsvorrichtung nach einem oder mehreren der vorhergehenden Ansprüche, **dadurch gekennzeichnet, dass** der Förderer ein Rollenförderer oder ein Bandförderer ist.

13. Verfahren zum Kennzeichnen von Eiern (8, 29, 44, 54), die unter einer Kennzeichnungsfläche (7, 28, 46, 55) auf einer Förderbahn (2a, 2b, 22a, 22b, 43, 53) eines Eierförderers hindurchlaufen, mittels der Kennzeichnungsfläche (7, 28, 46, 55), mit den Schritten, die Kennzeichnungsfläche (7, 28, 46, 55) in einer Ausgangsposition zu positionieren und anschließend ein Ei (8, 28, 44, 54) auf der Förderbahn an der Kennzeichnungsfläche (7, 28, 46, 55) vorbei zu bewegen, **dadurch gekennzeichnet, dass** die Kennzeichnungsfläche (7, 28, 46, 55) in der Ausgangsposition im Bewegungspfad der Eier (8, 28, 44, 54) gelegen ist und beim Hindurchlaufen des Eis (8, 28, 44, 54) in Kontakt mit der Schale des Eis (8, 28, 44, 54) gehoben wird und einen Abdruck auf der Eischale hinterlässt, wonach die Kennzeichnungsfläche (7, 28, 46, 55) in die Ausgangsposition zurückkehrt, **dadurch gekennzeichnet, dass** sich das Ei (8, 28, 44, 54) beim Vorbeilaufen an der Kennzeichnungsfläche (7, 28, 46, 55) relativ zur Kennzeichnungsfläche (7, 28, 46, 55) bewegt, wobei die Schale des Eis vorzugsweise beim Vorbeilaufen an der Kennzeichnungsfläche (7, 28, 46, 55) über die Kennzeichnungsfläche (7, 28, 46, 55) abrollt.

## Revendications

1. Dispositif d'estampillage (1, 21, 41, 51) pour estampiller des oeufs (8, 29, 44, 54), comprenant un transporteur d'oeufs ayant au moins une bande transporteuse (2a, 2b, 22a, 22b, 43, 53) pour des oeufs (8, 28, 44, 54) et un élément d'estampillage (6, 27, 42, 52) disposé au-dessus de l'au moins une bande transporteuse, sur le côté inférieur de cet élément d'estampillage une surface d'estampillage (7, 28, 46, 55) qui est mobile verticalement par rapport à la trajectoire de déplacement des oeufs est prévue, et qui comprend un moyen d'alimentation en encre pour alimenter en encre la surface d'estampillage, dans lequel la surface d'estampillage (7, 28, 46, 55) a une position initiale située à une première distance au-dessus de la bande transporteuse sur laquelle la surface d'estampillage est située dans la trajectoire de déplacement d'oeufs devant être estampillés, et en ce que la surface d'estampillage peut se déplacer vers le haut par rapport à la position initiale lorsqu'elle entre en contact avec la coquille d'un oeuf (8, 28, 44, 54) passant en dessous de l'élément d'estampillage (6, 27, 42, 52) au cours de l'utilisation du dispositif, de manière à ce que la surface d'estampillage laissera une empreinte sur la coquille d'oeuf, avec la surface d'estampillage retournant à la position initiale après le passage de l'oeuf, **caractérisé en ce que** des moyens de manipulation (2a, 2b, 6 ; 23, 27 ; 30 ; 43, 42 ; 52, 53) sont prévus, lesquels moyens amènent la surface d'oeuf devant être estampillée à se déplacer par rapport à la surface d'estampillage (7, 28, 46, 55) lors du passage de l'oeuf en dessous de la surface d'estampillage.

2. Dispositif d'estampillage selon la revendication 1, **caractérisé en ce que** l'élément d'estampillage (6, 27, 42, 52) est enfonçable de manière élastique.

3. Dispositif d'estampillage selon la revendication 1 ou 2, **caractérisé en ce qu'**au moins la surface d'estampillage (7, 28, 46, 55) de l'élément d'estampillage est compressible de manière élastique.

4. Dispositif d'estampillage selon l'une ou plusieurs des revendications précédentes, **caractérisé en ce que** l'élément d'estampillage dans son ensemble peut se déplacer de manière élastique vers le haut, où de préférence la force élastique provient au moins sensiblement de la force de gravité.

5. Dispositif d'estampillage selon l'une ou plusieurs des revendications précédentes, **caractérisé en ce que** l'élément d'estampillage comprend un support allongé (5, 26), qui est monté sur le dispositif d'estampillage, au-dessus de la trajectoire de déplacement, selon un angle par rapport à la verticale au niveau ou au moins à proximité d'une extrémité, avec la surface d'estampillage étant prévue sur la face inférieure du support allongé au niveau ou au moins à proximité de l'autre extrémité de celui-ci, étant situé derrière la première extrémité de l'élément de maintien, vu dans la direction de transport du transporteur.

6. Dispositif d'estampillage selon la revendication 5, **caractérisé en ce que** la deuxième extrémité du support allongé pend vers le bas avec la surface d'estampillage dans une condition non chargée dans la position initiale.

7. Dispositif d'estampillage selon l'une ou plusieurs des revendications précédentes, **caractérisé en ce qu'**un élément d'arrêt (9) est prévu, lequel élément empêche l'élément d'estampillage muni de la surface d'estampillage de se déplacer vers le bas plus loin que la première distance au-dessus de la bande transporteuse dans la position initiale.

8. Dispositif d'estampillage selon l'une ou plusieurs des revendications précédentes, **caractérisé en ce que** la bande transporteuse peut être enfoncée élastiquement.

9. Dispositif d'estampillage selon la revendication 1, **caractérisé en ce que** les moyens de manipulation comprennent des moyens de manipulation passive (6, 27, 42, 52) qui comprennent de préférence des moyens de résistance qui, en cours d'utilisation, offrent une résistance au déplacement d'au moins une partie d'un oeuf passant.

10. Dispositif d'estampillage selon l'une ou plusieurs des revendications précédentes, **caractérisé en ce que** les moyens de manipulation comprennent des moyens de manipulation active (23).

11. Dispositif d'estampillage selon l'une ou plusieurs des revendications précédentes, **caractérisé en ce que** les moyens de manipulation sont en mouvement par rapport à un oeuf présent sur une bande transporteuse en cours d'utilisation et s'engagent avec l'oeuf pour transmettre ledit mouvement au moins partiellement à l'oeuf.

12. Dispositif d'estampillage selon l'une ou plusieurs des revendications précédentes, **caractérisé en ce que** le transporteur est un transporteur à rouleaux ou un transporteur à ruban.

13. Procédé d'estampillage d'oeufs (8, 29, 44, 54) passant en dessous d'une surface d'estampillage (7, 28, 46, 55) sur une bande transporteuse (2a, 2b, 22a, 22b, 43, 53) d'un transporteur d'oeufs au moyen de ladite surface d'estampillage (7, 28, 46, 55), comprenant les étapes qui consistent à positionner la surface d'estampillage (7, 28, 46, 55) dans une position initiale et par la suite à déplacer un oeuf (8, 28, 44 , 54) sur la bande transporteuse devant la surface d'estampillage (7, 28, 46, 55), **caractérisé en ce que** la surface d'estampillage (7, 28, 46, 55) est située dans la trajectoire de déplacement des oeufs (8, 28 , 44, 54) dans la position initiale et est soulevée en contact avec la coquille de l'oeuf (8, 28, 44, 54) lors du passage de l'oeuf (8, 28, 44, 54), laissant une empreinte sur la coquille d'oeuf, après quoi la surface d'estampillage (7, 28, 46, 55) retourne à la position initiale, **caractérisé en ce que** l'oeuf (8, 28, 44, 54) se déplace par rapport à une surface d'estampillage (7, 28, 46, 55) lors du passage par la surface d'estampillage (7, 28, 46, 55), avec la coquille de l'oeuf roulant de préférence sur la surface d'estampillage (7, 28, 46, 55) lors du passage par la surface d'estampillage (7, 28, 46, 55).
